# EUROPEAN PATENT APPLICATION

(11) **EP 4 691 948 A1**
(43) Date of publication of application: **11.02.2026**
(21) Application number: 25765175.2
(22) Date of filing: 27.03.2025
(51) Int. Cl.: B65G 1/04

(54) **SHELF AND WAREHOUSING SYSTEM**

(30) Priority: 07.06.2024 CN 202421316051 U
(71) Applicant: Hai Robotics Co., Ltd., Shenzhen, Guangdong 518000 (CN)
(72) Inventor: WANG, Chengwu, Shenzhen, Guangdong 518000 (CN)
(74) Representative: Gulde & Partner
(86) International application number: PCT/CN2025/085434
(87) International publication number: WO 2025/251747

(57) **Abstract**

This application provides a shelving unit and a warehousing system, and relates to the field of warehousing and logistics technologies. A shelving unit includes a shelving unit body, a guide rail, and a support base. The shelving unit body includes a plurality of columns and a plurality of beams. The plurality of columns extend along a vertical direction and are arranged at intervals along a first horizontal direction. Any beam of the plurality of beams is connected to at least two columns, and the plurality of beams are arranged at intervals along the vertical direction. The support base is connected to at least one beam of the plurality of beams and extends along a second horizontal direction, and the guide rail extends along the vertical direction. The guide rail is connected to the shelving unit body through the support base. During assembly of the guide rail, the guide rail may be directly mounted with the support base, so that the guide rail does not need to dock with and be fixed with the column, thereby improving mounting convenience of the guide rail and reducing mounting costs.

## Description

### CROSS-REFERENCES

This application claims priority to Chinese Patent Application No. 202421316051.0, filed with the China National Intellectual Property Administration on June 7, 2024 and entitled "SHELVING UNIT AND WAREHOUSING SYSTEM", which is incorporated herein by reference in its entirety.

### TECHNICAL FIELD

This application relates to the field of warehousing and logistics technologies, and in particular, to a shelving unit and a warehousing system.

### BACKGROUND OF THE INVENTION

With the development of artificial intelligence and automated technologies, robots are widely used in the field of warehousing and logistics, for picking or placing, transporting, and sorting goods. In a logistics system, goods are usually stored in a shelving unit. A robot with a corresponding function picks or places goods or completes a goods transporting task by docking with the shelving unit or a conveyor.

In a related technology, the robot may have a climbing function. The robot may climb on the shelving unit through a guide rail to pick or place goods.

However, currently, a mounting structure of the guide rail on the shelving unit is complex, mounting costs are high, and mounting precision is low.

### SUMMARY OF THE INVENTION

This application provides a shelving unit and a warehousing system, to at least partially resolve current technical problems: a complex mounting structure of a guide rail on the shelving unit, high mounting costs, and low mounting precision.

According to a first aspect, this application provides a shelving unit. The shelving unit includes a shelving unit body, a guide rail, and a support base. The shelving unit body includes a plurality of columns and a plurality of beams. The plurality of columns are configured to extend along a vertical direction and are arranged at intervals along a first horizontal direction. Any beam of the plurality of beams is connected to at least two columns, and the plurality of beams are arranged at intervals along the vertical direction.

The support base is connected to at least one beam of the plurality of beams and is configured to extend along a second horizontal direction. The guide rail is configured to extend along the vertical direction. The guide rail is connected to the shelving unit body through the support base. The shelving unit may further include a connection member. The connection member is disposed on a side of the guide rail facing the shelving unit body and is connected to the support base. The connection member at least partially extends above the support base, to abut against an upper surface of the support base.

According to the shelving unit provided in this embodiment of this application, the support base is disposed on the beam. During assembly of the guide rail, the guide rail may be directly mounted to the support base, so that the guide rail does not need to dock with and be fixed with the column, thereby improving mounting convenience of the guide rail, reducing mounting costs, and improving mounting precision.

In an optional implementation, at least two guide rails are provided and may be located on a same side of the shelving unit body.

In this way, space occupation of the guide rail can be reduced, and a warehousing density of a warehousing system can be improved.

In an optional implementation, a plurality of support bases are disposed on a same beam. Heights of the plurality of support bases on the same beam relative to a horizontal plane are the same.

In an optional implementation, a first end of the support base is connected to the at least one beam, a second end of the support base extends in a direction away from the shelving unit body, and the guide rail is connected to the second end of the support base.

In this way, a mounting operation on the guide rail is facilitated, and mounting convenience is improved.

In an optional implementation, the second end of the support base is provided with a first threaded hole, the guide rail is provided with a first mounting hole, and the first mounting hole is connected to the first threaded hole by using a first fastener, to fixedly connect the support base to the guide rail.

In this way, reliability of a connection between the guide rail and the support base can be improved.

In an optional implementation, the first mounting hole may include a first hole section and a second hole section communicating with each other. The first hole section corresponds to the first threaded hole. A radius of the second hole section is larger than a radius of the first hole section.

In this way, the first fastener can pass through the first mounting hole, so that the guide rail can be quickly mounted.

In an optional implementation, the connection member may include a first connection section and a second connection section connected to each other. The first connection section is connected to the guide rail. The second connection section is bent toward the support base relative to the first connection section and extends above the support base. The second connection section is fixedly connected to the support base.

In an optional implementation, the upper surface of the support base is provided with a second threaded hole. The second connection section is provided with a second mounting hole corresponding to the second threaded hole. The second mounting hole is connected to the second threaded hole by using a second fastener, to fixedly connect the support base to the guide rail.

In this way, a plurality of the guide rails can be aligned, and the second fastener can be prevented from bearing a weight of the guide rail, thereby improving structural reliability.

In an optional implementation, one of the plurality of beams may include a beam body and two connection sheets. The two connection sheets may be respectively connected to two ends of the beam body and are respectively connected to columns at the two ends of the beam.

In this way, convenience of assembly of the beam and the columns can be improved, and mounting efficiency can be improved.

In an optional implementation, a plurality of guide rails and a plurality of support bases may be provided. Two support bases are respectively connected to the connection sheets at the two ends of the beam. At least one support base is connected to the beam body. The plurality of guide rails are connected, in a one-to-one correspondence, to the plurality of support bases arranged along a length direction of the beam.

In this way, by using the beam, it is ensured that positions of the plurality of support bases in a horizontal direction are consistent, to ensure that mounting positions of the plurality of guide rails are flush with each other.

In an optional implementation, the guide rail may include a bottom wall and two side walls, and the two side walls are respectively connected to two sides of the bottom wall. The bottom wall and the two side walls define a guide slot. The shelving unit may further include a plurality of hanging kits, and the plurality of hanging kits are disposed in the guide slot and are arranged at intervals along an extension direction of the guide slot.

In this way, when a robot climbs on the shelving unit along the guide rail, the hanging kit may support the robot in the guide slot.

In an optional implementation, one of the plurality of hanging kits may include a protruding portion and two connection portions. The two connection portions are respectively connected to at two ends of the protruding portion, and the two connection portions are connected to the bottom wall. The protruding portion protrudes relative to the bottom wall. Each of the two connection portions is provided with a clutch part, the guide rail is provided with hanging recesses, and each clutch part is caught on a hanging recess.

In this way, the hanging kit is hanged on the guide rail for mounting, thereby improving mounting convenience.

In an optional implementation, each of the connection portions is provided with at least two clutch parts respectively connected to two sides of the connection portion.

In this way, two sides of the hanging kit are supported at the same time, so that reliability of a connection between the hanging kit and the guide rail can be improved.

In an optional implementation, each of the two connection portions is provided with a third mounting hole. The bottom wall is provided with a fourth mounting hole. The hanging kit is connected to the guide rail through the third mounting hole and the fourth mounting hole by using a third fastener.

In this way, the hanging kit is prevented from shaking in the guide slot and is also prevented from falling out of the hanging recess.

In an optional implementation, each of the two side walls has folded part connected to a side of the side wall facing away from the bottom wall. The folded part is folded outward the guide slot.

In this way, when the robot docks with the guide rail, the folded part can abut against the robot for limiting same, thereby ensuring accuracy of docking with the guide rail by the robot.

In an optional implementation, the guide rail may include at least two guide sections successively docking with each other along the vertical direction. Two adjacent guide sections are detachably connected to each other.

In this way, when the guide rail is damaged, the guide rail can be partially replaced, thereby improving repair convenience and reducing repair costs.

In an optional implementation, one of the two adjacent guide sections may be provided with a catching protrusion, the other of the two adjacent guide sections may be provided with a catching slot, and the catching protrusion is caught on the catching slot.

In this way, accuracy of docking between the two guide sections can be ensured.

In an optional implementation, adjacent ends of the two adjacent guide sections jointly form a connection hole. The shelving unit may further include a connection plate and a fourth fastener. The connection plate is located at a docking position of the two adjacent guide sections and abuts against the two guide sections. The fourth fastener is configured to pass through the connection hole, so as to connect the connection plate and the support base.

In this way, the two adjacent guide sections can be compressed through the connection plate, to avoid misalignment of the two guide sections.

According to a second aspect, this application provides a warehousing system. The warehousing system includes a robot and the shelving unit in the foregoing technical solutions. The robot is configured to move on the ground, or dock with the shelving unit and move along a guide rail of the shelving unit.

In an optional implementation, a plurality of shelving units are provided and are arranged at intervals. An aisle is provided between adjacent shelving units. The guide rail is disposed on only one side of the aisle.

In this way, the robot can perform climbing along the shelving unit on one side of the aisle, thereby facilitating reducing a width of the aisle and improving the warehouse density of the warehousing system.

In an optional implementation, an end of the guide rail close to the bottom of the shelving unit is provided with a detection hole, and the robot is provided with a detection unit. The detection unit is configured to determine a relative position of the robot and the guide rail by detecting the detection hole.

In this way, rapid alignment between the robot and the guide rail can be implemented, and efficiency of docking between the robot and the shelving unit can be improved.

This application provides a shelving unit and a warehousing system. The shelving unit includes a shelving unit body, a guide rail, and a support base. The shelving unit body includes a plurality of columns and a plurality of beams. The plurality of columns are configured to extend along a vertical direction and are arranged at intervals along a first horizontal direction. Any of the plurality of beams is connected to at least two columns, and the plurality of beams are arranged at intervals along the vertical direction. The support base is connected to at least one of the plurality of beams and is configured to extend along a second horizontal direction, and the guide rail extends along the vertical direction. The guide rail is connected to the shelving unit body through the support base. During assembly of the guide rail, the guide rail may be directly mounted with the support base, so that the guide rail does not need to dock with and be fixed with the column, thereby improving mounting convenience of the guide rail and reducing mounting costs.

In addition to the technical problems resolved through embodiments of this application described above, the technical features constituting the technical solutions, and the beneficial effects brought about by the technical features of these technical solutions, other technical problems that can be resolved through the shelving unit and the warehousing system provided in the embodiments of this application, other technical features included in the technical solutions, and the beneficial effects brought about by these technical features are to be further described in detail in detailed description.

### BRIEF DESCRIPTION OF DRAWINGS

To describe the technical solutions of the embodiments of this application or the related art more clearly, the accompanying drawings required for describing the embodiments or the related art are briefly introduced below. Apparently, the accompanying drawings in the following description show some embodiments of this application, and a person of ordinary skill in the art may still derive other drawings from these accompanying drawings without creative efforts.
FIG. 1 is a schematic structural diagram of a shelving unit according to an embodiment of this application;
FIG. 2 is a partial view of a position A in FIG. 1;
FIG. 3 is a schematic diagram of a connection between a beam, a support base, and a guide rail in a shelving unit according to an embodiment of this application;
FIG. 4 is a front view of FIG. 3;
FIG. 5 is a partial view of a position B in FIG. 4;
FIG. 6 is a side view of FIG. 4;
FIG. 7 is a schematic diagram of a connection between a guide rail and a connection member in a shelving unit according to an embodiment of this application;
FIG. 8 is a schematic diagram of mounting of a hanging kit in a shelving unit according to an embodiment of this application;
FIG. 9 is a schematic structural diagram of a hanging kit in a shelving unit according to an embodiment of this application;
FIG. 10 is a schematic structural diagram of a beam in a shelving unit according to an embodiment of this application;
FIG. 11 is a schematic diagram of a multi-section connection of a guide rail in a shelving unit according to an embodiment of this application;
FIG. 12 is an exploded view of a multi-section connection position of a guide rail in a shelving unit according to an embodiment of this application; and
FIG. 13 is a schematic structural diagram of a warehousing system according to an embodiment of this application.

Description of the reference signs:
10-shelving unit;
100-shelving unit body; 110-column; 120-beam; 121-beam body; 122-connection sheet; 130-crossbar;
200-guide rail; 201-first mounting hole; 201a-first hole section; 201b-second hole section; 202-first fastener; 203-guide slot; 204-hanging recess; 205-fourth mounting hole; 206-detection hole; 210-bottom wall; 220-side wall; 230-folded part; 240-guide section; 241-catching protrusion; 242-catching slot;
300-support base; 301-first threaded hole; 302-second threaded hole;
400-connection member; 410-first connection section; 420-second connection section; 421-second mounting hole; 430-second fastener;
500-hanging kit; 510-protruding portion; 520-connection portion; 521-third mounting hole; 530-clutch part; 540-third fastener;
600-connection plate; 610-fourth fastener; and
20-robot.

### DETAILED DESCRIPTION

In order to make objectives, technical solutions, and advantages of embodiments of this application clearer, the technical solutions in the embodiments of this application are to be clearly and completely described below with reference to the accompanying drawings in the embodiments of this application. Apparently, the embodiments to be described are a part rather than all of the embodiments of this application. All other embodiments obtained by a person of ordinary skill in the art based on the embodiments of this application without creative efforts shall fall within the protection scope of this application.

First, it should be understood by a person skilled in the art that these implementations are merely used for explaining the technical principles of this application, and are not intended to limit the protection scope of this application. A person skilled in the art may make corresponding adjustment to the implementations as required to adapt to specific application scenarios.

In addition, it should be noted that, in the description of this application, terms such as "upper", "lower", "left", "right", "front", "rear", "inner", and "outer" that indicate directions or position relationships are based on directions or position relationships shown in the accompanying drawings. This is merely for ease of description, and does not indicate or imply that a device or member needs to have a specific orientation, and is constructed and operated in a specific orientation, and therefore cannot be understood as a limitation to this application.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of this application. In this specification, a schematic description of the foregoing terms does not necessarily refer to a same embodiment or example. In addition, the described specific features, structures, materials, or characteristics may be combined in any one or more embodiments or examples in an appropriate manner.

In this application, terms "connection" or "mounting" may be used interchangeably. The "connection" may be a direct connection, or may be an indirect connection by using an intermediate piece; or may be a fixed connection, or may be an active connection. When the connection is the "fixed connection", the "fixed connection" may be fixedly connected in a manner of integrally forming, or may be fixedly and detachably connected by using a fixing member (like a screw).

Various types of robots are widely applied to various fields such as industry and daily life. The robot plays an important role in industries such as transportation and logistics. In a warehouse and logistics system, goods are usually stored by using a shelving unit, and the robot may pick or place the goods by docking with the shelving unit or a conveyor, and may transport the goods. Currently, the robot may have a climbing function, and the robot may climb on the shelving unit through a guide rail to pick or place goods. However, currently, a mounting structure of the guide rail on the shelving unit is complex, mounting costs are high, and mounting precision is low.

In view of the foregoing problems, the embodiments of this application provide a shelving unit and a warehousing system. By designing a connection structure between a guide rail and a shelving unit, the guide rail is supported and fixed through a support base on a beam of the shelving unit, thereby improving mounting convenience of the guide rail, simplifying a mounting structure of the guide rail, and reducing costs of mounting the guide rail on the shelving unit.

For ease of understanding, application scenarios of the shelving unit and the warehousing system provided in the embodiments of this application are described first.

The shelving unit provided in the embodiments is applied to a warehousing system for storing goods. The warehousing system may be applied to different fields such as logistics warehousing of industrial production lines, storage of inventory products in the manufacturing industry, storage of products in the retail industry, or storage of parcels in e-commerce logistics. In addition, products or goods to be transported may be industrial parts, electronic accessories or products, medicines, clothing accessories, food, books, or the like. In addition, the shelving unit may directly transfer goods, or may transfer a container (container) loaded with goods. This is not specifically limited in the embodiments of this application. A "container" is used to refer to an object stored on the shelving unit below, and no specific examples are given.

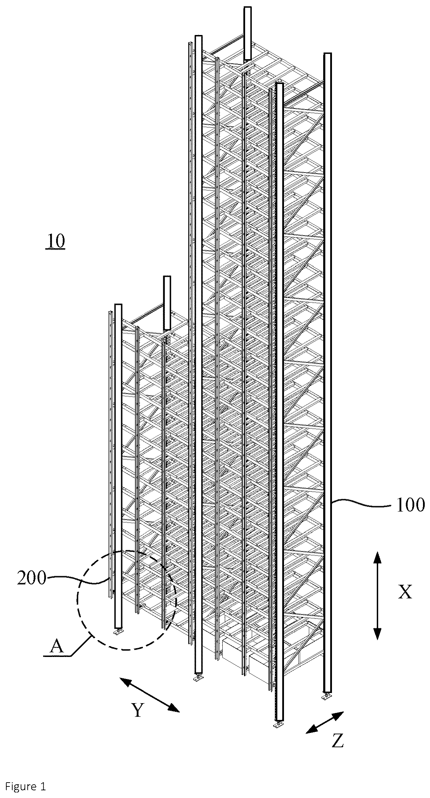

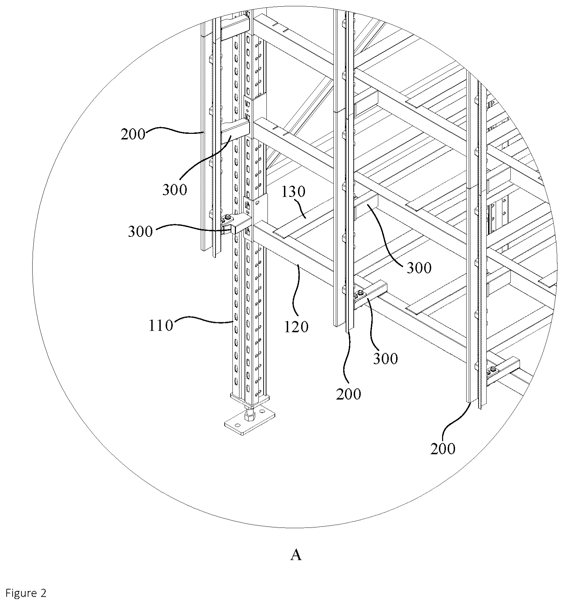

FIG. 1 is a schematic structural diagram of a shelving unit according to an embodiment of this application. FIG. 2 is a partial view of a position A in FIG. 1.

As shown in FIG. 1 and FIG. 2, this embodiment provides a shelving unit 10. The shelving unit 10 includes a shelving unit body 100, a guide rail 200, and a support base 300. The shelving unit body 100 is configured to store containers. The guide rail 200 is connected to the shelving unit body 100 through the support base 300. In a warehousing system, a robot may climb on the shelving unit 10 along the guide rail 200, and pick a container from the shelving unit body 100 or place a container on the shelving unit body 100.

The shelving unit body 100 includes a plurality of columns 110 and a plurality of beams 120. The plurality of columns 110 are configured to extend along a vertical direction and are arranged at intervals along a first horizontal direction. Any beam 120 of the plurality of beams 120 is connected to the at least two columns 110, and the plurality of beams 120 are arranged at intervals along the vertical direction. The columns 110 and the beams 120 form a frame structure of the shelving unit body 100. A warehousing level is formed between two adjacent beams 120, and the shelving unit 10 may have a plurality of warehousing levels. Each of the warehousing levels may have at least one storage position, and a container may be stored in the storage position.

Exemplarily, the plurality of columns 110 are arranged in an array. The beam 120 is connected to a front-side column 110 and a rear-side column 110 of the shelving unit body 100, and a carrier is connected between the beams 120 on the front and rear sides. A carrier is configured to carry the container put into the storage position. A structural form of the carrier may include, but is not limited to, shelf panels, a plurality of rolls, a plurality of crossbars, and the like. This is not specifically limited in the embodiments of this application. For example, when a crossbar 130 is used, as shown in FIG. 2, one storage position may include two crossbars 130 spaced apart from each other by a particular distance. The two crossbars 130 jointly support a weight of a container.

In some embodiments, the support base 300 is connected to at least one beam 120 of the plurality of beams 120 and extends along a second horizontal direction. The guide rail 200 extends along the vertical direction. The guide rail 200 is connected to the shelving unit body 100 through the support base 300.

The shelving unit 10 may further include a connection member 400. The connection member 400 is disposed on a side of the guide rail 200 facing the shelving unit body 100. The connection member 400 is connected to the support base 300. The connection member 400 at least partially extends above the support base 300, to abut against an upper surface of the support base 300 (that is, placed above the support base 300). It should be noted that, the connection member 400 may directly abut against the upper surface of the support base 300, or the connection member 400 may abut against the upper surface of the support base 300 through a pad, a washer, or the like. The support base 300 may carry a weight of the guide rail 200 by using the connection member 400, thereby improving reliability of mounting the guide rail 200.

In some embodiments, at least two guide rails 200 are provided and are located on a same side of the shelving unit body 100.

It may be understood that, the support base 300 is fixedly connected to the beam 120, and the support base 300 supports and fixes the guide rail 200. The beam 120 extends along a horizontal direction, so that support bases 300 connected to a same beam 120 are arranged at intervals along the horizontal direction. Heights of the support bases 300 on the same beam 120 to the ground are the same, so that heights of the guide rails 200 connected to different support bases 300 on the same beam 120 to the ground can be consistent.

It should be noted that, in the shelving unit 10 provided in this embodiment of this application, the support base 300 is disposed on the beam 120. During assembly of the guide rail 200, the guide rail 200 may be directly mounted with the support base 300, so that the guide rail 200 does not need to dock with and be fixed with the column 110, thereby improving mounting convenience of the guide rail 200, reducing mounting costs, and improving mounting precision.

In addition, the column 110 and the beam 120 of the shelving unit body 100 may be extruded profiles made of a metal or alloy material including iron, aluminum, or the like. A size, a material, and the like of the shelving unit body 100 are not specifically limited in the embodiments of this application.

In some embodiments, at least two guide rails 200 may be located on a same side of the shelving unit body 100. In this way, space occupied by the guide rail 200 can be reduced, and a warehousing density of the warehousing system can be improved.

It may be understood that, the guide rail 200 may be disposed on a side of the shelving unit 10 that a storage position entrance faces. One guide rail 200 is provided on each of two sides of the storage position entrance of the shelving unit 10. When a robot of the warehousing system docks with the shelving unit 10, the robot may dock with guide rails 200 on the two sides of a warehousing bay in which a corresponding storage position is located.

A length direction of the column 110 is defined as an X direction. The X direction is the vertical direction. A length direction of the beam 120 is defined as a Y direction. The Y direction is the first horizontal direction. A direction perpendicular to an XY plane is a Z direction. The Z direction is the second horizontal direction.

In some embodiments, a plurality of support bases 300 are disposed on a same beam 120. Heights of the plurality of support bases 300 on the same beam 120 relative to a horizontal plane are the same. The plurality of guide rails 200 are respectively mounted on the plurality of support bases 300 along the length direction of the beam 120, thereby improving precision of mounting positions of the plurality of guide rails 200.

A specific connection structure between the support base 300 and the guide rail 200 is described in detail below.

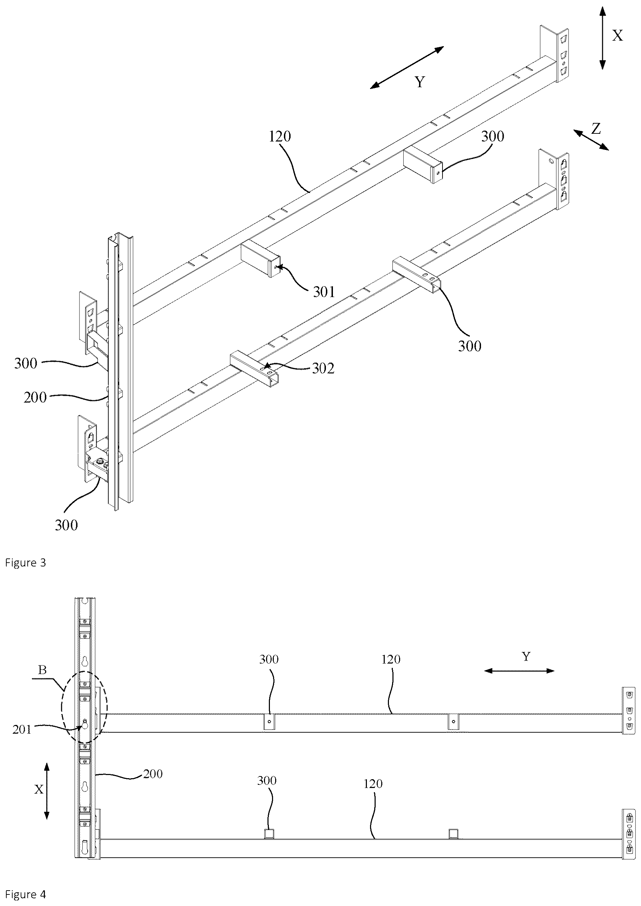

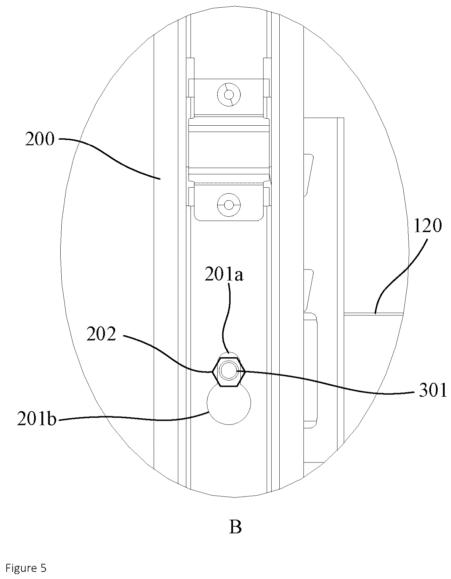

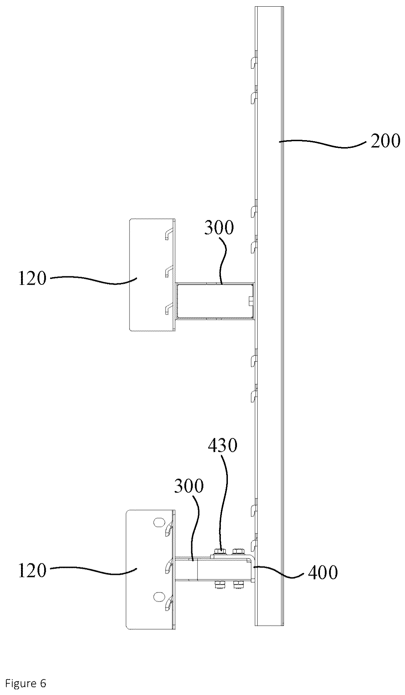

FIG. 3 is a schematic diagram of a connection between a beam, a support base, and a guide rail in a shelving unit according to an embodiment of this application. FIG. 4 is a front view of FIG. 3. FIG. 5 is a partial view of a position B in FIG. 4. FIG. 6 is a side view of FIG. 4.

Referring to FIG. 2 to FIG. 6, in some embodiments, a first end of the support base 300 is connected to the at least one beam 120, a second end of the support base 300 extends in a direction away from the shelving unit body 100, and the guide rail 200 is connected to the second end of the support base 300. In this way, the guide rail 200 is fixed and supported through the support base 300. During assembly of the guide rail 200, the guide rail 200 only needs to be connected to the support base 300. The support base 300 causes the guide rail 200 to have a particular gap with the shelving unit body 100. In this way, a mounting operation on the guide rail 200 is facilitated, and mounting convenience is improved.

It may be understood that, the support base 300 extends along the Z direction.

Exemplarily, the first end of the support base 300 may be connected to the beam 120 by using a fastener like a stud, or the first end of the support base 300 and the beam 120 may be welded to each other or be integrally formed. This is not specifically limited in the embodiments of this application.

Exemplarily, the support base 300 is made of a metal or alloy material including iron, aluminum, or the like. The support base 300 may be an extruded profile member, thereby facilitating processing and forming, and reducing manufacturing costs.

It should be noted that the guide rail 200 and the support base 300 may be connected to each other in different manners, which are described below by using different specific examples.

Referring to FIG. 3 to FIG. 5, in a possible implementation, the second end of the support base 300 is provided with a first threaded hole 301, the guide rail 200 is provided with a first mounting hole 201, and the first mounting hole 201 corresponds to the first threaded hole 301. The shelving unit 10 further includes a first fastener 202. The first fastener 202 passes through the first mounting hole 201 and is spirally connected to the first threaded hole 301, thereby improving reliability of a connection between the guide rail 200 and the support base 300.

Exemplarily, the first fastener 202 may be a stud. The first mounting hole 201 may include a first hole section 201a and a second hole section 201b communicating with each other. The first hole section 201a corresponds to the first threaded hole 301. A radius of the second hole section 201b is larger than a radius of the first hole section 201a. In this way, the first mounting hole 201 is formed as a hardy hole structure, so that the first fastener 202 can pass through the first mounting hole 201. Therefore, the guide rail 200 can be quickly mounted, to avoid that the first fastener 202 cannot pass through the first mounting hole 201 due to a processing error.

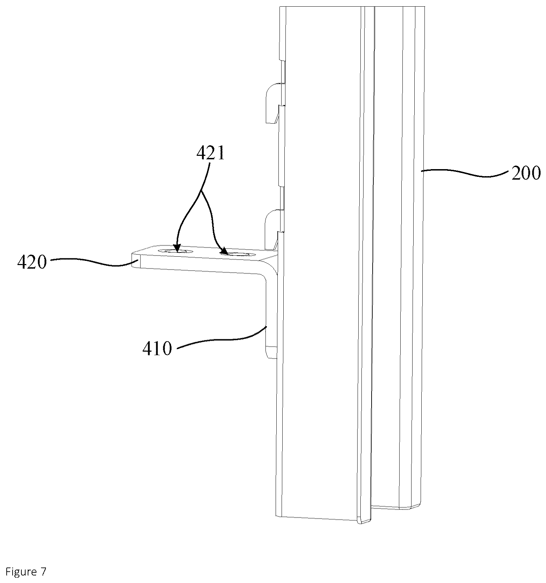

FIG. 7 is a schematic diagram of a connection between a guide rail and a connection member in a shelving unit according to an embodiment of this application.

Referring to FIG. 6 and FIG. 7 with reference to FIG. 1 to FIG. 3, in another possible implementation, the connection member 400 may be welded to the guide rail 200. During assembly of the guide rail 200, the connection member 400 may be first disposed above the support base 300, and the support base 300 supports the guide rail 200, thereby quickly and accurately positioning the guide rail 200. Subsequently, the guide rail 200 is fixed to the support base 300, thereby improving assembly convenience.

In some embodiments, the connection member 400 may include a first connection section 410 and a second connection section 420 connected to each other. The first connection section 410 is connected to the guide rail 200. The second connection section 420 is bent toward the support base 300 relative to the first connection section 410 and extends above the support base 300. The second connection section 420 is fixedly connected to the support base 300.

In some embodiments, the shelving unit 10 may further include a second fastener 430. The upper surface of the support base 300 is provided with a second threaded hole 302, the second connection section 420 is provided with a second mounting hole 421 corresponding to the second threaded hole 302, and the second fastener 430 passes through the second mounting hole 421 and is spirally connected to the second threaded hole 302. In this way, it can be avoided that the second fastener 430 carries a shearing force caused by the weight of the guide rail 200. The second fastener 430 performs only a fixing function, to prolong a service life of the second fastener 430.

Exemplarily, the second fastener 430 is a stud. The upper surface of the support base 300 is provided with a plurality of second threaded holes 302, and the second connection section 420 is provided with a plurality of second mounting holes 421. The plurality of second mounting holes 421 are disposed in a one-to-one correspondence with the plurality of second threaded holes 302, thereby improving reliability of a connection between the connection member 400 and the support base 300. There may be two, three, or more second mounting holes 421 and two, three, or more second threaded holes 302. This is not specifically limited in the embodiments of this application.

It should be noted that, when the plurality of guide rails 200 are mounted, the connection members 400 of the plurality of guide rails 200 may be disposed on different support bases 300 in the length direction of the beam 120, thereby aligning the plurality of guide rails 200, and ensuring consistency of spacings of the plurality of guide rails 200 to the ground.

Referring to FIG. 1 and FIG. 2, in this embodiment of this application, the guide rail 200 extends along the vertical direction, that is, the guide rail 200 extends along the X direction, and passes through the plurality of beams 120 arranged along the vertical direction. Different positions in the length direction of each guide rail 200 may be respectively connected to support bases 300 on beams 120 at corresponding height positions, so that there are a plurality of different mounting and fixing points in a length direction of the guide rail 200, thereby improving reliability of mounting the guide rail 200. Any one of the foregoing manners of connecting the guide rail 200 to the support base 300 may be used at different positions in the length direction of the guide rail 200. Alternatively, different manners of connecting to the support base 300 may be respectively used at different positions in the length direction of the guide rail 200.

Exemplarily, using one guide rail 200 as an example, there are a plurality of connection and fixing positions from a bottom end of the guide rail 200 to a top end of the guide rail 200. Each of the connection and fixing positions is connected to a support base 300 on a beam 120 at a corresponding height position. A connection and fixing position at an end close to the ground corresponds to a beam 120 at a bottom end of the shelving unit body 100, and the guide rail 200 may be connected to the support base 300 on the beam 120 at the connection and fixing position by using a connection member 400. In addition, other connection and fixing positions upward may be connected to support bases 300 on corresponding beams 120 by using first fasteners 202. In this way, when there is a good supporting and positioning effect for the guide rail 200, mounting convenience of the guide rail 200 is improved.

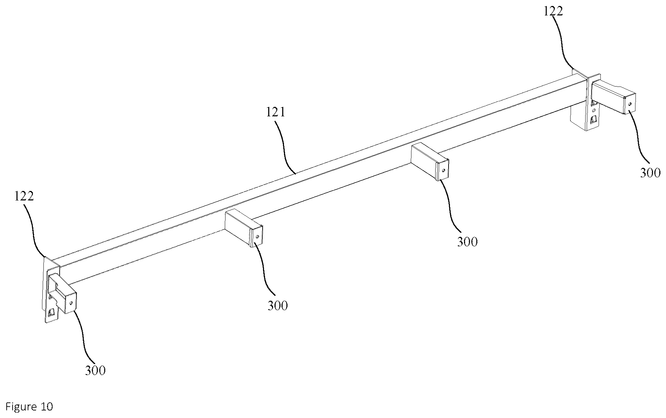

FIG. 10 is a schematic structural diagram of a beam in a shelving unit according to an embodiment of this application.

Referring to FIG. 10 with reference to FIG. 1 to FIG. 3, in some embodiments, one beam 120 of the plurality of beams 120 may include a beam body 121 and two connection sheets 122. The two connection sheets 122 may be respectively connected to two ends of the beam body 121 and are respectively connected to columns 110 at the two ends of the beam 120. In this way, convenience of assembly of the beam 120 and the columns 110 can be improved, and mounting efficiency can be improved.

It may be understood that, the connection sheet 122 and an end portion of the beam body 121 may be welded to each other or may be integrally formed, or the connection sheet 122 and the end portion of the beam body 121 may be connected and fixed by using a fastener like a stud.

For example, a structure of the connection sheet 122 may be an "L"-shaped structure, so that when the connection sheet 122 docks with the column 110, the connection sheet 122 may abut against adjacent two side surfaces of the column 110 at the same time, to position front and rear mounting positions of the beam 120 relative to the column 110, thereby improving accuracy of a mounting position of the beam 120. The connection sheet 122 and the column 110 may be connected to each other by using a fastener like a stud.

In some embodiments, a plurality of guide rails 200 and a plurality of support bases 300 may be provided. Two support bases 300 are respectively connected to the connection sheets 122 at the two ends of the beam 120. At least one support base 300 is connected to the beam body 121. The plurality of guide rails 200 are connected, in a one-to-one correspondence, to the plurality of support bases 300 arranged along the length direction of the beam 120.

It may be understood that, the beam 120 extends along the Y direction, the beam 120 passes through a plurality of storage positions of one warehousing level along the Y direction, and a plurality of support bases 300 arranged along the Y direction are connected to the same beam 120. One support base 300 is disposed at each of the two ends of the beam 120, and at least one support base 300 is also disposed at a middle position of the beam 120. A spacing between two adjacent support bases 300 may match a width of the storage position. Correspondingly, a spacing between two adjacent guide rails 200 matches the width of the storage position.

It should be noted that, by using the beam 120 disposed horizontally, it may be ensured that positions of the plurality of support bases 300 in the horizontal direction are consistent, to ensure that mounting positions of the plurality of guide rails 200 are flush with each other, so that mounting heights of the plurality of guide rails 200 are consistent.

A specific structure of the guide rail 200 is described in detail below.

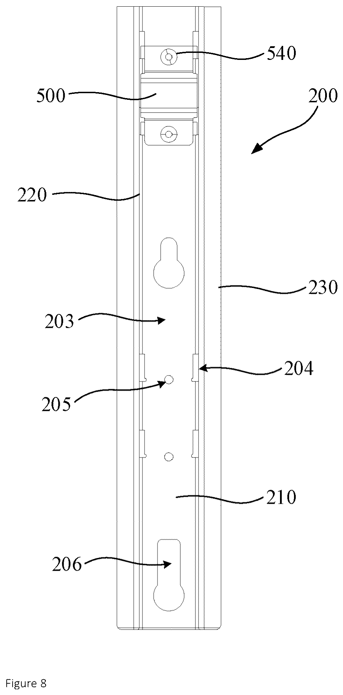

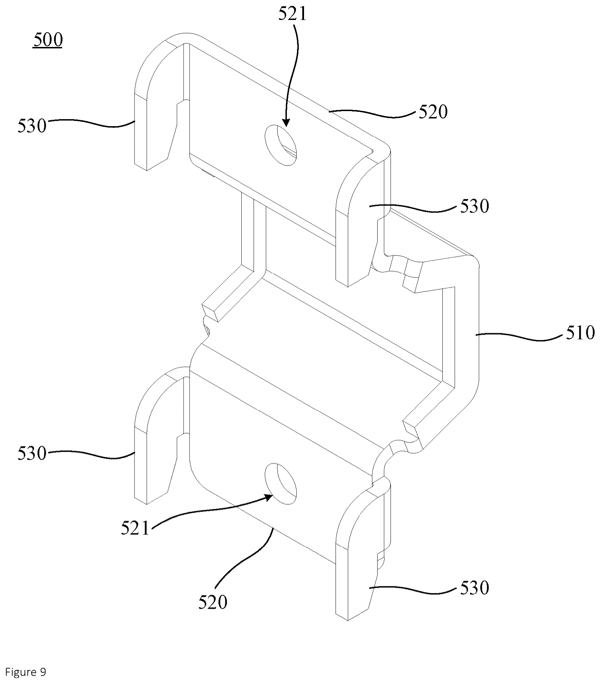

FIG. 8 is a schematic diagram of mounting of a hanging kit in a shelving unit according to an embodiment of this application. FIG. 9 is a schematic structural diagram of a hanging kit in a shelving unit according to an embodiment of this application.

Referring to FIG. 8 and FIG. 9 with reference to FIG. 1 to FIG. 3, in a possible implementation, the guide rail 200 may include a bottom wall 210 and two side walls 220, and the two side walls 220 are respectively connected to two sides of the bottom wall 210 and enclose a guide slot 203. The shelving unit 10 may further include a plurality of hanging kits 500, and the plurality of hanging kits 500 are disposed in the guide slot 203 and are arranged at intervals along an extension direction of the guide slot 203.

It may be understood that, the guide slot 203 extends along the X direction, and the plurality of hanging kits 500 in the guide slot 203 are disposed at equidistant intervals along the X direction. The plurality of hanging kits 500 form, in the guide slot 203, an engagement structure that cooperates with the robot. When the robot climbs on the shelving unit 10 along the guide rail 200, the hanging kit 500 may support the robot in the guide slot 203.

In some embodiments, one hanging kit 500 of the plurality of hanging kits 500 may include a protruding portion 510 and two connection portions 520. The two connection portions 520 are respectively connected to two ends of the protruding portion 510, and the connection portions 520 are connected to the bottom wall 210. The protruding portion 510 protrudes relative to the bottom wall 210. The protruding portion 510 has an engagement function when docking with the robot.

The connection portion 520 is provided with a clutch part 530, and the guide rail 200 is provided with a hanging recess 204, and the clutch part 530 is caught on the hanging recess 204. In this way, the hanging kit 500 can be hanged on the guide rail 200 for mounting, thereby improving mounting convenience. The clutch part 530 may be bent in a direction away from the protruding portion 510 relative to the connection portion 520. The hanging recess 204 may be disposed at a position at which the bottom wall 210 interfaces with the side wall 220.

For example, each of the connection portions 520 is provided with at least two clutch parts 530 respectively connected to two sides of the connection portion 520. In this way, two sides of the hanging kit 500 are supported at the same time, so that reliability of a connection between the hanging kit 500 and the guide rail 200 can be improved.

In some embodiments, the two connection portions 520 each may be provided with a third mounting hole 521, and the bottom wall 210 is provided with a fourth mounting hole 205. The shelving unit 10 may further include a third fastener 540. The third fastener 540 successively passes through the third mounting hole 521 and the fourth mounting hole 205, to connect the hanging kit 500 to the guide rail 200 In this way, the hanging kit 500 is prevented from shaking in the guide slot 203 and is also prevented from falling out of the hanging recess 204.

It may be understood that, the hanging kit 500 is supported in the guide slot 203 through cooperation between the clutch part 530 and the hanging recess 204. The third fastener 540 fixes the hanging kit 500, but the third fastener 540 does not carry a radial shearing force, thereby prolonging a service life of the third fastener 540. When the robot performs climbing along the guide rail 200, a climbing structure of the robot is engaged with and docks with the hanging kit 500. In this case, a part of a weight of the robot is carried by the clutch part 530 through the hanging kit 500. In this way, good structural strength of the hanging kit 500 is ensured.

Exemplarily, the third fastener 540 is a rivet. The hanging kit 500 is fixed, through riveting, to the bottom wall 210 of the guide rail 200.

In some embodiments, the two side walls 220 each have a folded part 230. The folded part 230 is connected to a side of the side wall 220 facing away from the bottom wall 210. The folded part 230 is folded outward the guide slot 203. When the robot docks with the guide rail 200, the folded part 230 can abut against the robot for limiting same, thereby ensuring accuracy of docking with the guide rail 200 by the robot. For example, a climbing mechanism of the robot may be provided with at least two wheels, where at least one wheel may roll on a side surface of the folded part 230 facing the shelving unit, and at least one wheel may roll on a side surface of the folded part 230 facing away from the shelving unit.

Exemplarily, the side wall 220 may be vertically disposed relative to the bottom wall 210, and the folded part 230 may be vertically disposed relative to the side wall 220.

It should be noted that, the protruding portion 510, the connection portion 520, and the clutch part 530 may be an integrally formed member or may be welded to each other. A material of the hanging kit 500 may be a metal or an alloy including iron, aluminum, or the like, or the material of the hanging kit 500 may be an engineering plastic having high structural strength. A specific material and a forming manner of the hanging kit 500 are not limited in the embodiments of this application.

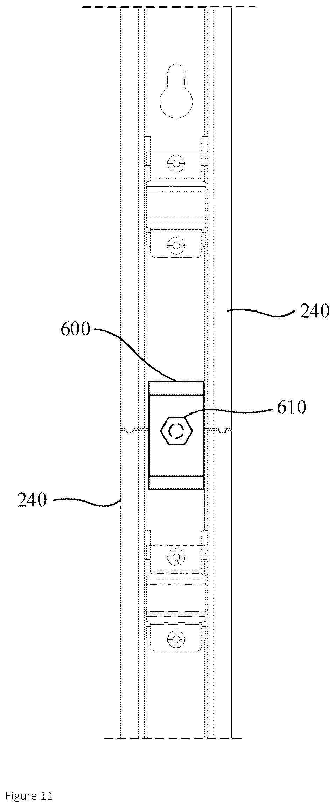

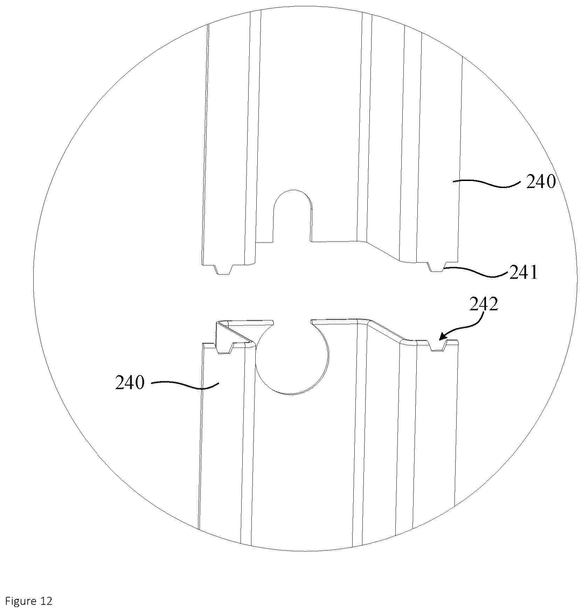

FIG. 11 is a schematic diagram of a multi-section connection of a guide rail in a shelving unit according to an embodiment of this application. FIG. 12 is an exploded view of a multi-section connection position of a guide rail in a shelving unit according to an embodiment of this application.

Referring to FIG. 11 and FIG. 12 with reference to FIG. 1 to FIG. 3, in a possible implementation, the guide rail 200 may include at least two guide sections 240 successively docking with each other along the vertical direction. Two adjacent guide sections 240 are detachably connected to each other. When the guide rail 200 is damaged, the guide rail 200 can be partially replaced, thereby improving repair convenience and reducing repair costs.

Exemplarily, one of the two adjacent guide sections 240 may be provided with a catching protrusion 241, and the other of the two adjacent guide sections 240 may be provided with a catching slot 242. When the two adjacent guide sections 240 dock with each other, the catching protrusion 241 is caught on the catching slot 242. In this way, accuracy of docking between the two guide sections 240 can be ensured.

Exemplarily, the catching protrusion 241 and the catching slot 242 may be respectively disposed on folded parts 230 of the two adjacent guide sections 240. Folded parts 230 at two sides of the upper guide section 240 are respectively provided with catching protrusions 241, and folded parts 230 at two sides of the lower guide section 240 are respectively provided with catching slots 242. In some other implementations, the folded parts 230 at two sides of the upper guide section 240 mat be respectively provided with catching slots, and the folded parts 230 at two sides of the lower guide section 240 may be respectively provided with catching protrusions.

It may be understood that, a guide section 240 at an end close to the ground is a start position at which the robot docks with the guide rail 200. Therefore, frequent docking or detachment between the guide section 240 and the robot easily causes wear. When the guide section 240 is repaired, only the guide section 240 of the guide rail 200 at the end close to the ground may be disassembled and replaced, thereby improving device maintenance convenience and reducing maintenance costs.

In some embodiments, adjacent ends of the two adjacent guide sections 240 jointly form a connection hole. A docking position of the two adjacent guide sections 240 corresponds to the support base 300. The shelving unit 10 may further include a connection plate 600 and a fourth fastener 610. The connection plate 600 is located at the docking position of the two adjacent guide sections 240 and abuts against the two guide sections 240. The fourth fastener 610 is configured to connect the connection plate 600 to the support base 300 through the connection hole. In this way, the two adjacent guide sections 240 can be compressed through the connection plate 600, to avoid misalignment of the two guide sections 240.

Exemplarily, the fourth fastener 610 is a stud, and at least one of the two adjacent guide sections 240 is provided with an avoidance notch or an avoidance hole at a position corresponding to the fourth fastener 610 on the guide rail 200. The fourth fastener 610 passes through the avoidance hole or the avoidance notch and is connected to the corresponding support base 300, so that the two adjacent guide sections 240 can be compressed through the connection plate 600.

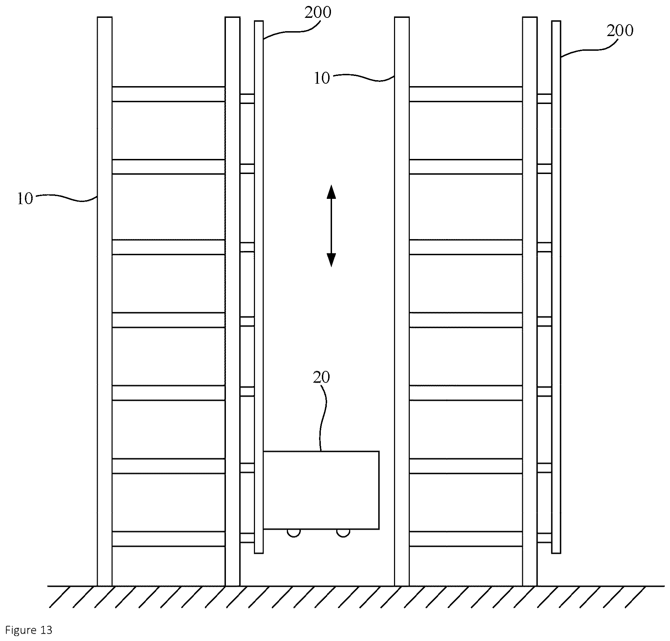

FIG. 13 is a schematic structural diagram of a warehousing system according to an embodiment of this application.

Referring to FIG. 13, this application provides a warehousing system. The warehousing system includes a robot 20 and the shelving unit 10 in the foregoing technical solutions. The robot 20 is configured to move on the ground, or dock with the shelving unit 10 and move up or down along a guide rail 200 of the shelving unit 10.

It may be understood that, when the robot 20 docks with the shelving unit 10, the robot 20 may first move to a warehousing bay in which a target storage position is located, dock with a guide rail 200 of the warehousing bay, and move to a corresponding warehousing level along the guide rail 200, to reach the target storage position.

In some embodiments, a plurality of shelving units 10 may be provided and are arranged at intervals. An aisle is provided between adjacent shelving units 10. The guide rail 200 is located on a same side in the aisle. That is, in one aisle, only one side of a shelving unit 10 is provided with the guide rail 200, and the guide rail 200 is disposed on a side facing the aisle. The robot 20 may perform climbing along the shelving unit 10 on one side of the aisle, thereby facilitating reducing a width of the aisle and improving a warehouse density of the warehousing system.

It may be understood that, when the robot 20 picks or places goods in the aisle, the robot 20 may dock with and climb on guide rails 200 on one side of the aisle, and the robot 20 has a particular gap with a shelving unit 10 of the other side of the aisle. The robot 20 climbing on a single side may bidirectionally pick and place goods. That is, the robot may pick or place a container on the side of the shelving unit 10 provided with the guide rail 200, and may also pick or place a container on the side of the shelving unit 10 not provided with the guide rail 200.

Referring to FIG. 8 and FIG. 13, in some embodiments, an end of the guide rail 200 close to the bottom of the shelving unit 10 is provided with a detection hole 206, and the robot 20 is provided with a detection unit. When the robot 20 docks with the guide rail 200, the detection unit corresponds to the detection hole 206. The detection unit determines a relative position of the robot 20 and the guide rail 200 by detecting the detection hole 206. In this way, rapid alignment between the robot 20 and the guide rail 200 can be implemented, and efficiency of docking between the robot 20 and the shelving unit 10 can be improved.

Exemplarily, the detection unit may be a laser sensor, an infrared sensor, or the like. This is not specifically limited in the embodiments of this application.

It should be noted that, the warehousing system provided in the embodiments of this application may include all technical solutions and technical effects of the foregoing shelving unit 10. Details are not described herein again.

Embodiments of this application provide a shelving unit 10 and a warehousing system. The shelving unit 10 includes a shelving unit body 100, a guide rail 200, and a support base 300. The shelving unit body 100 includes a plurality of columns 110 and a plurality of beams 120. The plurality of columns 110 extend along a vertical direction and are arranged at intervals. The plurality of beams 120 are connected between adjacent columns 110 and are arranged at intervals along the vertical direction. The support base 300 is connected to the beam 120, and the guide rail 200 extends along the vertical direction. The guide rail is connected to the shelving unit body 100 through the support base 300. During assembly of the guide rail 200, the guide rail 200 may be directly mounted with the support base 300, so that the guide rail 200 does not need to dock with and be fixed with the column 110, thereby improving mounting convenience of the guide rail 200 and reducing mounting costs.

Finally, it should be noted that the foregoing embodiments are merely used for describing the technical solutions of this application, but are not intended to limit this application. Although this application is described in detail with reference to the foregoing embodiments, It should be understood by a person of ordinary skill in the art that modifications can be made to the technical solutions described in the foregoing embodiments, or equivalent replacements can be made to some or all of the technical features in the technical solutions; and such modifications or replacements will not cause the essence of corresponding technical solutions to depart from the scope of the technical solutions in the embodiments of this application.

## Claims

1. A shelving unit, comprising a shelving unit body, a guide rail, and a support base; wherein the shelving unit body comprises a plurality of columns and a plurality of beams, the plurality of columns are configured to extend along a vertical direction, the plurality of columns are arranged at intervals along a first horizontal direction, any of the plurality of beams is connected to at least two columns, and the plurality of beams are arranged at intervals along the vertical direction;
wherein the support base is connected to at least one of the plurality of beams, and the support base is configured to extend along a second horizontal direction;
wherein the guide rail is configured to extend along the vertical direction, and the guide rail is connected to the shelving unit body through the support base; and
further comprising a connection member, wherein the connection member is disposed on a side of the guide rail facing the shelving unit body, and the connection member is configured to at least partially extend above the support base, to abut against an upper surface of the support base.

2. The shelving unit according to claim 1, wherein at least two guide rails are provided, and the at least two guide rails are located on a same side of the shelving unit body.

3. The shelving unit according to claim 1, wherein a plurality of support bases are disposed on a same beam, and heights of the plurality of support bases on the same beam relative to a horizontal plane are the same.

4. The shelving unit according to claim 1, wherein a first end of the support base is connected to the at least one beam, a second end of the support base is configured to extend in a direction away from the shelving unit body, and the guide rail is connected to the second end of the support base.

5. The shelving unit according to claim 4, wherein the second end of the support base is provided with a first threaded hole, the guide rail is provided with a first mounting hole, and the first mounting hole is connected to the first threaded hole by using a first fastener, to fixedly connect the support base to the guide rail.

6. The shelving unit according to claim 5, wherein the first mounting hole comprises a first hole section and a second hole section communicating with each other, the first hole section corresponds to the first threaded hole, and a radius of the second hole section is larger than a radius of the first hole section.

7. The shelving unit according to claim 4, wherein the connection member comprises a first connection section and a second connection section connected to each other, the first connection section is connected to the guide rail, the second connection section is bent toward the support base relative to the first connection section and extends above the support base, and the second connection section is fixedly connected to the support base.

8. The shelving unit according to claim 7, wherein the upper surface of the support base is provided with a second threaded hole, the second connection section is provided with a second mounting hole corresponding to the second threaded hole, and the second mounting hole is connected to the second threaded hole by using a second fastener, to fixedly connect the support base to the guide rail.

9. The shelving unit according to any one of claims 1 to 8, wherein one of the plurality of beams comprises a beam body and two connection sheets, and the two connection sheets are respectively connected to two ends of the beam body and are respectively connected to columns at the two ends of the beam.

10. The shelving unit according to claim 9, wherein a plurality of guide rails and a plurality of support bases are provided, two of the plurality of support bases are respectively connected to the connection sheets at the two ends of the beam, at least one support base is connected to the beam body, and the plurality of guide rails are connected, in a one-to-one correspondence, to the plurality of support bases arranged along a length direction of the beam.

11. The shelving unit according to any one of claims 1 to 8, wherein the guide rail comprises a bottom wall and two side walls, the two side walls are respectively connected to two sides of the bottom wall, and the bottom wall and the two side walls define a guide slot; and
wherein the shelving unit further comprises a plurality of hanging kits, and the plurality of hanging kits are disposed in the guide slot and are arranged at intervals along an extension direction of the guide slot.

12. The shelving unit according to claim 11, wherein one of the plurality of hanging kits comprises a protruding portion and two connection portions;
wherein the two connection portions are respectively connected at two ends of the protruding portion, and the two connection portions are configured to be connected to the bottom wall, the protruding portion protrudes relative to the bottom wall, each of the two connection portions is provided with a clutch part, the guide rail is provided with hanging recesses, and each clutch part is caught on a hanging recess.

13. The shelving unit according to claim 12, wherein each of the connection portions is provided with at least two clutch parts respectively connected to two sides of the connection portion.

14. The shelving unit according to claim 12, wherein each of the two connection portions is provided with a third mounting hole, the bottom wall is provided with a fourth mounting hole, and the hanging kit is connected to the guide rail through the third mounting hole and the fourth mounting hole by using a third fastener.

15. The shelving unit according to claim 12, wherein each of the two side walls has a folded part connected to a side of the side wall facing away from the bottom wall, and the folded part is folded outward the guide slot.

16. The shelving unit according to any one of claims 1 to 8, wherein the guide rail comprises at least two guide sections successively docking with each other along the vertical direction, and two adjacent guide sections are detachably connected to each other.

17. The shelving unit according to claim 16, wherein one of the two adjacent guide sections is provided with a catching protrusion, the other of the two adjacent guide sections is provided with a catching slot, and the catching protrusion is configured to caught on the catching slot.

18. The shelving unit according to claim 16, wherein adjacent ends of the two adjacent guide sections jointly form a connection hole; and
wherein the shelving unit further comprises a connection plate and a fourth fastener, the connection plate is located at a docking position of the two adjacent guide sections and abuts against the two guide sections, and the fourth fastener is configured to pass through the connection hole, so as to connect the connection plate to the support base.

19. A warehousing system, comprising a robot and the shelving unit according to any one of claims 1 to 18, wherein the robot is configured to move on the ground, dock with the shelving unit and move along the guide rail of the shelving unit.

20. The warehousing system according to claim 19, wherein a plurality of shelving units are provided and are arranged at intervals, an aisle is formed between adjacent shelving units, and the guide rail is disposed on only one side of the aisle.

21. The warehousing system according to claim 19, wherein an end of the guide rail close to the bottom of the shelving unit is provided with a detection hole, the robot is provided with a detection unit, and the detection unit is configured to determine a relative position of the robot and the guide rail by detecting the detection hole.
